# EUROPÄISCHE PATENTSCHRIFT

(11) **EP 2 736 782 B1**
(45) Veröffentlichungstag und Bekanntmachung des Hinweises auf die Patenterteilung: **21.10.2020**
(21) Anmeldenummer: 12732606.4
(22) Anmeldetag: 25.06.2012
(51) Int. Cl.: B60T 17/04, B61L 15/00

(54) **LUFTABSPERRHAHN FÜR EINE BREMSLUFTLEITUNG EINES SPURGEBUNDENEN FAHRZEUGS SOWIE VERFAHREN ZUM ÜBERWACHEN DES BREMSDRUCKS SPURGEBUNDENER FAHRZEUGE**
AIR SHUT-OFF VALVE FOR A BRAKE AIR LINE OF A RAIL-BOUND VEHICLE, AND METHOD FOR MONITORING THE BRAKE PRESSURE OF RAIL-BOUND VEHICLES
ROBINET D'ARRÊT D'AIR POUR UNE CONDUITE DE FREIN DE VÉHICULE GUIDÉ SUR RAILS, ET PROCÉDÉ DE SURVEILLANCE DE LA PRESSION DE FREINAGE DE VÉHICULES GUIDÉS SUR RAILS

(30) Priorität: 14.09.2011 DE 102011082657
(43) Veröffentlichungstag der Anmeldung: 04.06.2014
(73) Patentinhaber: Siemens Mobility GmbH, 81739 München (DE)
(72) Erfinder: FAUBEL, Peter, 38154 Königslutter (DE); WINDOLF, Wolfgang, 38179 Schwülper (DE)
(86) Internationale Anmeldenummer: PCT/EP2012/062221
(87) Internationale Veröffentlichungsnummer: WO 2013/037523

(56) Entgegenhaltungen:
- US-A- 3 895 850
- US-A- 4 487 060
- US-A- 5 211 698
- US-A- 6 039 409

## Beschreibung

Die vorliegende Erfindung betrifft einen Luftabsperrhahn für eine Bremsluftleitung eines spurgebundenen Fahrzeugs.

Spurgebundene Fahrzeuge in Form von Schienenfahrzeugen weisen üblicherweise an den Enden der Bremsluftleitung beziehungsweise Hauptluftleitung jeweils einen Luftabsperrhahn auf. Dabei sind die Luftabsperrhähne üblicherweise zwischen der Bremsluftleitung und der jeweiligen aus Bremsschlauch und Kupplungskopf bestehenden Bremskupplung angeordnet. Die Luftabsperrhähne dienen somit zum Schließen und zum Öffnen der jeweiligen Leitung. Hierzu weisen Luftabsperrhähne üblicherweise einen Betätigungshebel beziehungsweise Handgriff auf, der in geschlossener Stellung des Hahnes senkrecht steht, während er bei geöffneter Stellung in Richtung des Bremsschlauchs zeigt. Um eine gefahrlose Entkupplung der Bremsschläuche gekuppelter spurgebundener Fahrzeuge, beispielsweise in Form von Güterwagen, vornehmen zu können, ist in Luftabsperrhähnen regelmäßig eine Entlüftungsbohrung vorgesehen, die beim Schließen des Luftabsperrhahns frei wird, wodurch die Bremsschläuche zwischen geschlossenen Luftabsperrhähnen entlüftet werden.

Aus der Patentschrift US 4,487,060 ist ein System zum Überwachen und Anzeigen des Luftdrucks in der Bremsleitung eines Eisenbahnzuges bekannt. Hierbei wird eine "Sensor/Transmitter Unit" verwendet, die ausgebildet ist, am letzten Fahrzeug des Eisenbahnzuges befestigt und mit der Bremsleitung des letzten Fahrzeugs gekoppelt zu werden.

Der vorliegenden Erfindung liegt die Aufgabe zugrunde, einen hinsichtlich der sich ergebenden Einsatz- und Anwendungsmöglichkeiten besonders vorteilhaften Luftabsperrhahn für eine Bremsluftleitung eines spurgebundenen Fahrzeugs anzugeben.

Diese Aufgabe wird erfindungsgemäß gelöst durch einen Luftabsperrhahn für eine Bremsluftleitung eines spurgebundenen Fahrzeugs, wobei der Luftabsperrhahn eine zur Erfassung von Luftdruck-Messwerten ausgebildete Sensor-Einrichtung aufweist.

Der erfindungsgemäße Luftabsperrhahn weist den Vorteil auf, dass mittels der Sensor-Einrichtung Luftdruck-Messwerte erfasst werden können, die in der Folge für eine Überwachung des jeweiligen Bremsdrucks sowie gegebenenfalls eine weitergehende Auswertung zur Verfügung stehen. Hierzu kann die Sensor-Einrichtung einerseits zur Erfassung von Luftdruck-Messwerten in der Bremsluftleitung beziehungsweise zur Seite der Bremsluftleitung hin ausgebildet sein. Alternativ oder zusätzlich hierzu besteht auch die Möglichkeit, dass die Sensor-Einrichtung des erfindungsgemäßen Luftabsperrhahns zum Erfassen von Luftdruck-Messwerten in Bezug auf die von der Bremsluftleitung des jeweiligen spurgebundenen Fahrzeugs abgewandten Seite des Luftabsperrhahns ausgebildet ist. In diesem Fall beziehen sich die erfassten Luftdruck-Messwerte somit üblicherweise auf den Luftdruck in dem Bremsschlauch, d.h. in dem Bereich zwischen dem Luftabsperrhahn und dem Kupplungskopf. Für den Fall, dass der Luftabsperrhahn geöffnet ist, sollten sich in beiden Fällen annähernd identische Luftdruck-Messwerte ergeben. Anders ist die Situation jedoch für den Fall, dass der Luftabsperrhahn geschlossen ist und somit in der Bremsluftleitung im Betrieb in der Regel der übliche Bremsdruck anliegt, während der sich auf der anderen Seite des Luftabsperrhahns anschließende Bremsschlauch entlüftet ist.

Es sei darauf hingewiesen, dass die Sensor-Einrichtung in Abhängigkeit von der jeweiligen Realisierung einen, zwei oder auch mehr Luftdruck-Sensoren umfassen kann. Dabei können diese Luftdruck-Sensoren im Wesentlichen voneinander unabhängig oder auch in einer gemeinsamen Komponente integriert sein.

Der erfindungsgemäße Luftabsperrhahn ist weiterhin insbesondere dahingehend vorteilhaft, dass es sich bei Luftabsperrhähnen üblicherweise um im Wesentlichen standardisierte Bauteile handelt, die bei nahezu allen UIC (Union internationale des chemins de fer / International Union of Railways)-Güterwagenbauarten verwendet werden. Hieraus resultiert eine besonders leichte Austauschbarkeit beziehungsweise Nachrüstbarkeit spurgebundener Fahrzeuge mit dem erfindungsgemäßen Luftabsperrhahn, ohne dass hierfür konstruktive Veränderungen der spurgebundenen Fahrzeuge, d.h. beispielsweise der betreffenden Güterwagen, erforderlich werden.

Der erfindungsgemäße Luftabsperrhahn ist insbesondere für spurgebundene Fahrzeuge in Form von Schienenfahrzeugen geeignet. Darüber hinaus ist er in Abhängigkeit von den jeweiligen Gegebenheiten jedoch auch für andere Arten spurgebundener Fahrzeuge anwendbar, d.h. beispielsweise für spurgebundene Fahrzeuge mit Gummibereifung.

Vorzugsweise ist der erfindungsgemäße Luftabsperrhahn derart weitergebildet, dass die Sensor-Einrichtung ausgebildet ist, Messdaten in Form zumindest eines erfassten Luftdruck-Messwertes und/oder zumindest einer aus dem zumindest einen erfassten Luftdruck-Messwert ermittelten Kenngröße auszusenden. Dabei kann es sich bei der zumindest einen aus dem zumindest einen erfassten Luftdruck-Messwert ermittelten Kenngröße beispielsweise um elektrisch durch die jeweilige Sensor-Einrichtung aufbereitete Messwerte oder Statusinformationen handeln. Durch das Aussenden der Messdaten in Form des zumindest einen erfassten Luftdruck-Messwertes und/oder der zumindest einen aus dem zumindest einen erfassten Luftdruck-Messwert ermittelten Kenngröße wird es hierbei vorteilhafterweise einer Auswerte-Einrichtung, die beispielsweise als Steuerrechner ausgebildet sein kann, ermöglicht, die Messdaten zu empfangen und in der Folge einer Auswertung zu unterziehen. Hierbei können gegebenenfalls die Messdaten weiterer Sensor-Einrichtungen oder auch sonstige verfügbare Informationen berücksichtigt werden.

Gemäß einer weiteren besonders bevorzugten Ausführungsform des erfindungsgemäßen Luftabsperrhahns ist die Sensor-Einrichtung zum drahtlosen, insbesondere funkbasierten Aussenden der Messdaten ausgebildet. Dies ist vorteilhaft, da hierdurch der Aufwand für eine Verkabelung des Luftabsperrhahns beziehungsweise der Sensor-Einrichtung vermieden wird. Dies ist insbesondere auch vor dem Hintergrund von Bedeutung, dass Luftabsperrhähne spurgebundener Fahrzeuge während ihres Betriebs typischerweise einer rauen Umgebung ausgesetzt sind und auch in diesem Fall eine zuverlässige Funktion der Sensor-Einrichtung zu gewährleisten ist. Hierzu kann die Sensor-Einrichtung beispielsweise derart ausgeführt sein, dass sie die Messdaten optisch aussendet. Im Hinblick auf die höhere Praxistauglichkeit wird es jedoch in der Regel vorteilhaft sein, die Sensor-Einrichtung derart auszuführen, dass sie zum funkbasierten Aussenden der Messdaten ausgebildet ist. Hierbei kann die Sensor-Einrichtung selbst eine entsprechende Funk-Übertragungseinrichtung aufweisen, d.h. beispielsweise als Funksensor ausgeführt sein, oder aber signaltechnisch an eine entsprechende Übertragungseinrichtung angebunden sein.

Gemäß einer weiteren besonders bevorzugten Ausführungsform ist der erfindungsgemäße Luftabsperrhahn derart ausgestaltet, dass die Sensor-Einrichtung ausgebildet ist, mit den Messdaten eine für das jeweilige spurgebundene Fahrzeug und/oder die jeweilige Sensor-Einrichtung spezifische Kennung auszusenden. Dies ist vorteilhaft, da es somit dem Empfänger der Messdaten ermöglicht wird, das jeweilige spurgebundene Fahrzeug und/oder die jeweilige Sensor-Einrichtung, welche die Messdaten ausgesendet hat, zu identifizieren. Dabei kann die Kennung beispielsweise unter Einbeziehung einer Identifikation des spurgebundenen Fahrzeugs, d.h. beispielsweise einer Wagenidentifikation, sowie einer Kennzeichnung des jeweiligen Fahrzeugendes gebildet werden.

Vorteilhafterweise kann der erfindungsgemäße Luftabsperrhahn auch derart weitergebildet sein, dass die Sensor-Einrichtung ausgebildet ist, Messdaten anderer Sensor-Einrichtungen durch Empfangen und anschließendes Aussenden der Messdaten weiterzuleiten. Dies ist vorteilhaft, da hierdurch beispielsweise im Falle eines Fahrzeugverbands in Form eines Zuges, der eine Vielzahl von spurgebundenen Fahrzeugen in Form von Güterwagen aufweist, eine Weiterleitung der Messdaten einzelner Sensor-Einrichtungen über ein durch die Sensor-Einrichtungen gebildetes Sensorfunknetz entlang des Zuges beispielsweise zu einer Auswerte-Einrichtung auf einem Triebfahrzeug erfolgen kann. Dies bietet den Vorteil, dass die Funkreichweite der einzelnen Sensor-Einrichtungen vergleichsweise kurz bemessen werden kann, wodurch der Vorteil eines vergleichsweise geringen Energiebedarfs der Sensor-Einrichtungen erzielt wird.

Gemäß einer weiteren besonders bevorzugten Weiterbildung weist der erfindungsgemäße Luftabsperrhahn eine leitungsunabhängige, autarke Energieversorgungs-Einrichtung auf. Dies ist vorteilhaft, da in diesem Fall auch zur Versorgung der Sensor-Einrichtung mit elektrischer Energie keine Kabelverbindungen erforderlich sind.

Im Rahmen der zuvor genannten bevorzugten Ausführungsform des erfindungsgemäßen Luftabsperrhahns kann die leitungsunabhängige, autarke Energieversorgungs-Einrichtung beispielsweise zumindest eine Primärzelle oder auch zumindest eine wiederaufladbare Sekundärzelle aufweisen. Des Weiteren kann die Energieversorgungs-Einrichtung beispielsweise auch zur Erzeugung beziehungsweise Wandlung elektrischer Energie aus der Umgebung des Luftabsperrhahns, d.h. zu so genanntem "Energy Harvesting", ausgebildet sein. So ist es beispielsweise denkbar, dass die Energieversorgungs-Einrichtung aus auftretenden Schwingungen beziehungsweise Erschütterungen elektrische Energie erzeugt.

Vorzugsweise kann der erfindungsgemäße Luftabsperrhahn auch ausgebildet sein, aus dem Luftdruck in der Bremsluftleitung elektrische Energie zu erzeugen. Dies ist vorteilhaft, da hierbei der sich im Betrieb im Bereich des Luftabsperrhahns ausbildende Luftdruck unmittelbar zur Erzeugung elektrischer Energie genutzt werden kann. Um einen dauerhaften Betrieb der Sensor-Einrichtung auch bei nicht ausreichendem Luftdruck zu gewährleisten, kann die Energieversorgungs-Einrichtung hierbei - ebenso wie bei den zuvor genannten alternativen Ausführungsformen der Energieversorgungs-Einrichtung - an eine Energiespeicher-Einrichtung elektrisch angebunden sein. Diese kann beispielsweise durch zumindest eine Sekundärzelle oder zumindest einen Doppelschichtkondensator gebildet werden.

Vorzugsweise kann der erfindungsgemäße Luftabsperrhahn auch derart ausgestaltet sein, dass er zum Detektieren der Stellung seines Betätigungshebels ausgebildet ist. Dies ist vorteilhaft, da in diesem Fall ergänzend zu dem von der Sensor-Einrichtung bereitgestellten Messdaten die Hebelstellung des Luftabsperrhahns überwacht werden kann. Hierdurch ist vorteilhafterweise eine Überprüfung dahingehend möglich, ob die Stellung des Betätigungshebels der aufgrund der Betriebssituation erwarteten Stellung entspricht und ob diese Stellung mit den von der Sensor-Einrichtung bereitgestellten Messdaten konsistent ist. Das Detektieren der Stellung des Betätigungshebels des Luftabsperrhahns kann hierbei beispielsweise mittels eines Neigungssensors erfolgen, wobei eine Übertragung der entsprechenden Messinformationen analog zu den Messdaten der Sensor-Einrichtung vorzugsweise funkbasiert erfolgt.

Die Erfindung umfasst des Weiteren einen Fahrzeugverband mit einer Mehrzahl von gekoppelten spurgebundenen Fahrzeugen, von denen zumindest eines zumindest einen erfindungsgemäßen Luftabsperrhahn beziehungsweise zumindest einen Luftabsperrhahn gemäß einer der zuvor genannten bevorzugten Weiterbildungen des erfindungsgemäßen Luftabsperrhahns aufweist, sowie mit einem Triebfahrzeug mit einer Auswerte-Einrichtung zum Empfangen der durch die Sensor-Einrichtung des zumindest einen Luftabsperrhahns ausgesendeten Messdaten.

Der erfindungsgemäße Fahrzeugverband ist vorteilhaft, da er es beispielsweise im Falle lokbespannter Güterzüge ermöglicht, eine Auswertung der durch die Sensor-Einrichtungen der spurgebundenen Fahrzeuge ausgesendeten spezifischen Kennungen und Messdaten triebfahrzeugseitig mit der Auswerte-Einrichtung vorzunehmen. Im Ergebnis sind hierdurch beispielsweise Aussagen in Bezug auf die Reihung sowie die Vollständigkeit des Fahrzeugverbands möglich.

Die Erfindung betrifft des Weiteren ein Verfahren zum Überwachen des Bremsdrucks spurgebundener Fahrzeuge.

Hinsichtlich des Verfahrens liegt der vorliegenden Erfindung die Aufgabe zugrunde, ein Verfahren zum Überwachen des Bremsdrucks spurgebundener Fahrzeuge anzugeben, das hinsichtlich der sich ergebenden Einsatz- und Anwendungsmöglichkeiten besonders vorteilhaft ist.

Diese Aufgabe wird erfindungsgemäß gelöst durch ein Verfahren zum Überwachen des Bremsdrucks spurgebundener Fahrzeuge, wobei mittels einer Sensor-Einrichtung zumindest eines Luftabsperrhahns zumindest ein Luftdruck-Messwert erfasst wird, Messdaten in Form des zumindest einen erfassten Luftdruck-Messwertes und/oder zumindest einer aus dem zumindest einen erfassten Luftdruck-Messwert ermittelten Kenngröße von einer Auswerte-Einrichtung empfangen werden und der Bremsdruck von der Auswerte-Einrichtung anhand der empfangenen Messdaten überwacht wird.

Das erfindungsgemäße Verfahren ist vorteilhaft, da es der Auswerte-Einrichtung ermöglicht, anhand der empfangenen Messdaten eine zuverlässige und vorzugsweise kontinuierliche Überwachung des Bremsdrucks des jeweiligen spurgebundenen Fahrzeugs vorzunehmen.

Vorzugsweise ist das erfindungsgemäße Verfahren derart ausgestaltet, dass bei einem Fahrzeugverband mit einem die Auswerte-Einrichtung aufweisenden Triebfahrzeug und einer Mehrzahl von gekoppelten spurgebundenen Fahrzeugen, von denen zumindest eines zumindest einen Luftabsperrhahn mit einer Sensor-Einrichtung zum Erfassen zumindest eines Luftdruck-Messwertes aufweist, von der Auswerte-Einrichtung anhand der empfangenen Messdaten die Reihung der spurgebundenen Fahrzeuge ermittelt und/oder die Vollständigkeit des Fahrzeugsverbands überwacht wird. Hierbei ist es beispielsweise möglich, dass anhand der von dem letzten spurgebundenen Fahrzeug des jeweiligen Fahrzeugsverbands empfangenen Messdaten die Vollständigkeit des Fahrzeugverbands erkannt wird. Insbesondere für den Fall, dass von der Auswerte-Einrichtung mit den Messdaten eine für das jeweilige spurgebundene Fahrzeug und/oder die jeweilige Sensor-Einrichtung spezifische Kennung empfangen wird, ist es darüber hinaus möglich, die Reihung der spurgebundenen Fahrzeuge zu ermitteln und mit beispielsweise aus einer Dispositionsliste stammenden Erwartungswerten zu vergleichen. In Abhängigkeit von der jeweiligen konkreten Realisierung kann es hierbei erforderlich sein, dass benachbarte Sensor-Einrichtungen sich jeweils wechselseitig identifizieren und eine entsprechende Information an die Auswerte-Einrichtung übermitteln; alternativ hierzu ist es im Falle einer Weiterleitung der Messdaten durch die einzelnen Sensor-Einrichtungen beispielsweise auch möglich, dass zusammen mit den Messdaten eine Information über den Übertragungsweg, d.h. über die bei der Übertragung zwischengeschalteten Sensor-Einrichtungen, an die Auswerte-Einrichtung übermittelt wird.

Gemäß einer weiteren besonders bevorzugten Ausführungsform des erfindungsgemäßen Verfahrens werden die Messdaten von der Auswerte-Einrichtung drahtlos, insbesondere funkbasiert, empfangen. Die Vorteile dieser sowie der beiden nachfolgend genannten bevorzugten Weiterbildungen des erfindungsgemäßen Verfahrens entsprechen denjenigen der jeweiligen zuvor genannten entsprechenden bevorzugten Weiterbildung des erfindungsgemäßen Luftabsperrhahns.

Vorzugsweise kann das erfindungsgemäße Verfahren auch derart ablaufen, dass von der Auswerte-Einrichtung mit den Messdaten eine für das jeweilige spurgebundene Fahrzeug und/oder die jeweilige Sensor-Einrichtung spezifische Kennung empfangen wird.

Gemäß einer weiteren besonders bevorzugten Weiterbildung des erfindungsgemäßen Verfahrens werden die Messdaten von der Auswerte-Einrichtung unter Zwischenschaltung weiterer Sensor-Einrichtungen empfangen.

Vorzugsweise kann das erfindungsgemäße Verfahren darüber hinaus auch derart ausgestaltet sein, das von der Sensor-Einrichtung Funksignale zumindest einer weiteren Sensor-Einrichtung empfangen werden und die Sensor-Einrichtung im Falle einer Änderung der Empfangsqualität der empfangenen Funksignale eine Statusmeldung an die Auswerte-Einrichtung aussendet. Hierbei ist es beispielsweise möglich, dass die Sensor-Einrichtungen benachbarter spurgebundener Fahrzeuge, d.h. beispielsweise gekoppelter Güterwagen, die Feldstärke eines von der jeweiligen anderen Sensor-Einrichtung empfangenen Funksignals auswerten und im Falle einer unerwarteten Änderung der Empfangsqualität des empfangenen Funksignals eine diesbezügliche Statusmeldung an die Auswerte-Einrichtung aussenden. Hierdurch wird es der Auswerte-Einrichtung vorteilhafterweise ermöglicht, die betreffende Statusmeldung als weiteres Kriterium im Hinblick auf eine Überwachung der Vollständigkeit des betreffenden Fahrzeugverbands heranzuziehen.

Im Folgenden wird die Erfindung anhand von Ausführungsbeispielen näher erläutert. Hierzu zeigt die
- Figur: in einer schematischen Skizze einen Ausschnitt eines Bremssystems eines spurgebundenen Fahrzeugs in Form eines Güterwagens mit einem Ausführungsbeispiel des erfindungsgemäßen Luftabsperrhahns.

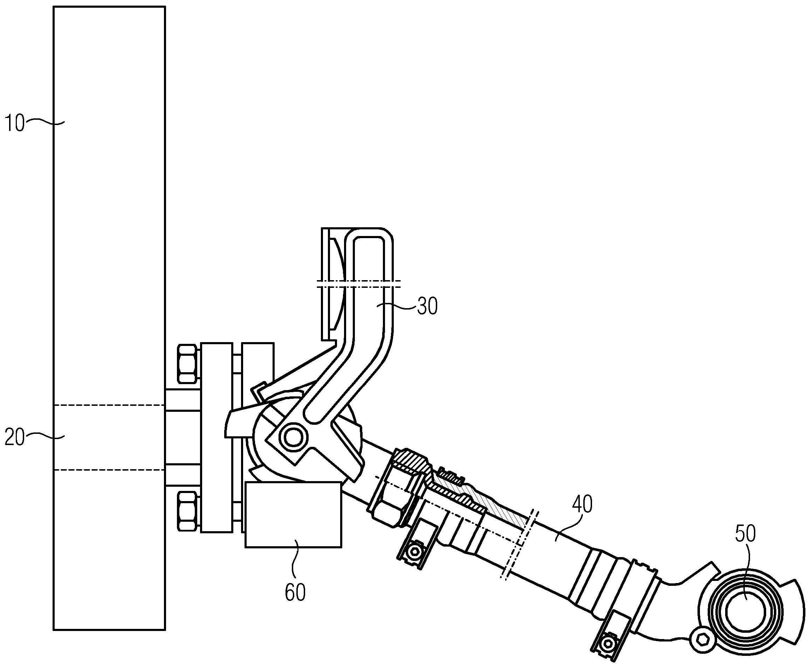

In der Figur ist schematisch ein Ende 10 eines spurgebundenen Fahrzeugs in Form eines Güterwagens angedeutet. In dem dargestellten Kupplungsbereich mündet eine Bremsluftleitung 20 in Form der Hauptluftleitung des betreffenden Güterwagens in einen Luftabsperrhahn 30, durch den die Bremsluftleitung 20 von einem Bremsschlauch 40 sowie einer Bremskupplung 50 abgetrennt werden kann. Der Luftabsperrhahn 30 wird somit im Rahmen des Betriebs des spurgebundenen Fahrzeugs zum Schließen und zum Öffnen der Bremsluftleitung 20 verwendet. Sofern das spurgebundene Fahrzeug beispielsweise innerhalb eines Fahrzeugverbands in Form eines Güterzugs angeordnet ist, so ist der Luftabsperrhahn 30 zu öffnen, damit eine durchgehende Versorgung anderer Fahrzeuge des Fahrzeugverbands mit der zum Betätigen der Bremsen erforderlichen Druckluft möglich ist. Sofern der betreffende Güterwagen jedoch beispielsweise am Ende eines entsprechenden Fahrzeugverbands angeordnet ist, so ist der Luftabsperrhahn 30 zu schließen, um ein Entweichen der Druckluft und damit einen entsprechenden Druckabfall innerhalb des Bremsluftsystems zu vermeiden.

In dem Ausführungsbeispiel der Figur ist der Luftabsperrhahn 30 beispielhaft in senkrechter Stellung gezeigt, welche üblicherweise der geschlossenen Stellung des Hahns entspricht.

Der Luftabsperrhahn 30 weist eine zur Erfassung von Luftdruck-Messwerten ausgebildete Sensor-Einrichtung 60 auf, welche in der Figur lediglich schematisch angedeutet ist. Die Sensor-Einrichtung 60 ist dahingehend Bestandteil des Luftabsperrhahns 30, dass sie in diesen integriert ist beziehungsweise an oder in diesem angebracht ist. Die Sensor-Einrichtung 60 dient der Erfassung von Luftdruck-Messwerten innerhalb des Bremsluftsystems des spurgebundenen Fahrzeugs und ist ausgebildet, Messdaten in Form zumindest eines Luftdruck-Messwertes zu erfassen. Diese Messdaten, die mittels zumindest eines Luftdrucksensors der Sensor-Einrichtung 60 erfasst werden, werden durch die Sensor-Einrichtung 60 elektrisch aufbereitet und mit einer für das jeweilige spurgebundene Fahrzeug und/oder die jeweilige Sensor-Einrichtung 60 spezifischen Kennung versehen. Dabei dient die Kennung einer eindeutigen Identifizierung der Quelle aus beziehungsweise von der die betreffenden Messdaten stammen und bezieht vorzugsweise eine Identifikation des betreffenden spurgebundenen Fahrzeugs, d.h. beispielsweise eine Wagenidentifikation, und eine das jeweilige Wagenende identifizierende Information mit ein.

In Abhängigkeit von der konkreten Realisierung der Sensor-Einrichtung 60 können sich die erfassten Luftdruck-Messwerte auf den Bereich der Bremsluftleitung 20, d.h. bezogen auf das Ausführungsbeispiel der Figur den Bereich links des Luftabsperrhahns 30, und/oder auf den Bereich des Bremsschlauchs 40, d.h. bezogen auf das in der Figur dargestellte Ausführungsbeispiel den Bereich rechts des Luftabsperrhahns 30, beziehen. Während sich die jeweiligen Luftdruck-Messwerte bei geöffnetem Luftabsperrhahn 30 entsprechen sollten, werden sich bei geschlossenen Luftabsperrhahn 30 in der Regel unterschiedliche Luftdruck-Messwerte einstellen.

Die erfassten Luftdruck-Messwerte und/oder zumindest eine aus dem zumindest einen erfassten Luftdruck-Messwert ermittelte Kenngröße werden in Form von Messdaten von der Sensor-Einrichtung 60 funkbasiert ausgesendet. Dabei kann die Sensor-Einrichtung 60 entweder als integrierter Funksensor ausgebildet oder aber an eine entsprechende Übertragungseinrichtung zur funkbasierten Datenübertragung, d.h. beispielsweise ein Funkmodul, kommunikationstechnisch angebunden sein. Die von der Sensor-Einrichtung 60 ausgesendeten Messdaten werden vorzugsweise von einer auf einem Triebfahrzeug des Fahrzeugverbands angeordneten Auswerte-Einrichtung empfangen und von dieser zur Überwachung des Luftdrucks innerhalb des Fahrzeugverbands verwendet. In Abhängigkeit von den jeweiligen Gegebenheiten und der Reichweite der verwendeten Übertragungseinrichtung kann die Übertragung der Messdaten dabei auf funktechnischem Wege über ein durch Sensor-Einrichtungen 60 gebildetes Sensorfunknetz entlang des Fahrzeugverbands beziehungsweise Zuges zu der Auswerte-Einrichtung auf dem Triebfahrzeug erfolgen. Hierbei sind die Sensor-Einrichtungen 60, die vorzugsweise Bestandteil jedes Luftabsperrhahns 30 des Fahrzeugverbands sind, somit ausgebildet, Messdaten anderer Sensor-Einrichtungen durch Empfangen und anschließendes Aussenden der Messdaten weiterzuleiten.

Der Luftabsperrhahn 30 weist ferner eine in der Figur aus Gründen der Übersichtlichkeit nicht dargestellte leitungsunabhängige, autarke Energieversorgungs-Einrichtung auf. Diese ermöglicht eine Versorgung der Sensor-Einrichtung 60 mit elektrischer Energie unabhängig von einer kabelgebundenen Energieversorgung. Dies ist in der Praxis in der Regel erforderlich, da insbesondere spurgebundene Fahrzeuge in Form von Güterwagen üblicherweise keine eigene Energieversorgung aufweisen, welche zum Betreiben der Sensor-Einrichtung 60 verwendet werden könnte. Die Energieversorgungs-Einrichtung kann einerseits unter Verwendung von Primärzellen oder auch von wiederaufladbaren Sekundärzellen realisiert sein. Andererseits ist es auch möglich, dass die Energieversorgungs-Einrichtung Umgebungsenergie, etwa in Form von Erschütterungen oder Licht, in elektrische Energie wandelt. Des Weiteren kann die Energieversorgungs-Einrichtung vorteilhafterweise ausgebildet sein, aus dem Luftdruck in der Bremsluftleitung elektrische Energie zu erzeugen. Dies bietet den Vorteil, dass die erforderliche elektrische Energie aus dem Bremsluftsystem selbst erzeugt wird. Um auch im entlüfteten Zustand des Bremsluftsystems eine zuverlässige Energieversorgung der Sensor-Einrichtung 60 zu gewährleisten, wird hierbei in der Regel ebenso wie bei den weiteren zuvor genannten Möglichkeiten des "Energy Harvesting" eine Energiespeicher-Einrichtung zweckmäßig beziehungsweise erforderlich sein, um einen Betrieb der Sensor-Einrichtung beispielsweise auch bei unzureichendem Luftdruck in der Bremsluftleitung oder bei Stillstand des betreffenden spurgebundenen Fahrzeugs sicherzustellen.

Die auf dem Triebfahrzeug des Fahrzeugverbands angeordnete Auswerte-Einrichtung, die beispielsweise als Steuerrechner realisiert sein kann, besitzt neben einer Einrichtung zum Empfang der Messdaten von den Sensor-Einrichtungen 60 insbesondere noch eine Verarbeitungs-Einrichtung zur Überwachung der von den einzelnen Sensor-Einrichtungen 60 übermittelten Messdaten. Anhand der mit diesen Messdaten übermitteln jeweiligen spezifischen Kennung ist die Auswerte-Einrichtung hierbei in der Lage, die empfangenen Messdaten entsprechend der Reihenfolge der Sensor-Einrichtungen 60 im Fahrzeugverband zu ordnen und damit die Reihung der spurgebundenen Fahrzeuge in dem Fahrzeugverband beziehungsweise Zug zu ermitteln. Hierzu ist es beispielsweise denkbar, dass im Falle einer Weiterleitung der Messdaten zwischen den Sensor-Einrichtungen 60 entlang des Fahrzeugverbands jede Sensor-Einrichtung 60 im Rahmen der Weiterleitung ihre jeweilige Kennung den Messdaten hinzufügt, um damit den Übertragungsweg und somit letztlich die Reihung der Sensor-Einrichtungen 60 und damit der spurgebundenen Fahrzeuge des Fahrzeugverbands zu übermitteln. Durch ein Ordnen der empfangenen Messdaten gemäß der Reihung der spurgebundenen Fahrzeuge ist es der Auswerte-Einrichtung somit möglich, den Druckverlauf im Bremsluftsystem, d.h. insbesondere in der Bremsluftleitung beziehungsweise Hauptluftleitung des gesamten Fahrzeugverbands beziehungsweise Zuges, zu überwachen. Dabei ergibt sich durch die Überwachung des Luftdrucks am hinteren Ende des letzten spurgebundenen Fahrzeugs des Fahrzeugverbands sowie durch die Auswertung der funktional Adressen entsprechenden Kennungen der Sensor-Einrichtungen beziehungsweise der mit ihnen verbundenen Funk-Übertragungseinrichtungen gleichzeitig eine Überwachung der Zugvollständigkeit.

Wie bereits erläutert, ist es im Sinne einer möglichst vollständigen Überwachung wünschenswert, dass alle Luftabsperrhähne 30 eines Fahrzeugverbands mit Sensor-Einrichtungen zur Erfassung von Luftdruck-Messwerten ausgerüstet sind. Unabhängig hiervon ist es jedoch auch möglich, dass lediglich einzelne spurgebundene Fahrzeuge, d.h. insbesondere das jeweils letzte spurgebundene Fahrzeug in einem Fahrzeugverband, die entsprechende Funktionalität aufweist beziehungsweise aufweisen.

Die Verwendung von Luftabsperrhähnen, die zur Erfassung von Luftdruck-Messwerten ausgebildete Sensor-Einrichtungen aufweisen, zur Überwachung des Drucks der Bremsluft spurgebundener Fahrzeuge ist insbesondere dahingehend vorteilhaft, dass es sich bei Luftabsperrhähnen um weitgehend standardisierte Bauteile handelt, die beispielsweise an nahezu allen Typen von UIC-Güterwagen verwendet werden. Hierdurch ergibt sich eine besonders einfache Austausch- beziehungsweise Nachrüstbarkeit, ohne dass hierfür konstruktive Veränderungen an den Güterwagen erforderlich werden.

Des Weiteren ist es möglich, den Luftabsperrhahn darüber hinaus zum Detektieren der Stellung seines Betätigungshebels auszubilden. Hierzu kann der Luftabsperrhahn 30 beispielsweise einen entsprechenden Neigungssensor aufweisen. Dies ermöglicht es vorteilhafterweise, weitere Kriterien für eine korrekte Zugbildung zu erfassen und eine weitere Konsistenzprüfung der erfassten Luftdruck-Messwerte durchzuführen. Darüber hinaus ist es insbesondere bei fortgeschrittener Ausrüstung einer Güterwagenflotte mit entsprechenden Sensor-Einrichtungen 60 möglich, durch Auswertung der Qualität, d.h. beispielsweise der Feldstärke, des Funksignals der entsprechenden Sensor-Einrichtungen am Nachbarwagen ein weiteres Kriterium für eine Zugvollständigkeitsüberwachung heranzuziehen. Des Weiteren ergibt sich hierdurch eine wechselseitige Funktionsüberwachung der Sensor-Einrichtungen, so dass beispielsweise ein durch den Ausfall einer Energieversorgungs-Einrichtung verursachter Defekt einer Sensor-Einrichtung zeitnah erkannt werden kann.

Zusammenfassend ist somit zu sagen, dass die zuvor beschriebenen Ausführungsformen des erfindungsgemäßen Luftabsperrhahns sowie des erfindungsgemäßen Verfahrens in der Praxis im Hinblick auf eine kostengünstige, leistungsfähige, zuverlässige und die Sicherheit erhöhende Überwachung des Bremsdrucks spurgebundener Fahrzeuge sowie die weiteren sich hieraus ergebenden Einsatz- und Anwendungsmöglichkeiten erhebliche Vorteile mit sich bringen.

## Patentansprüche

1. Luftabsperrhahn (30) für eine Bremsluftleitung (20) eines spurgebundenen Fahrzeugs,
**dadurch gekennzeichnet, dass**
der Luftabsperrhahn (30) eine zur Erfassung von Luftdruck-Messwerten ausgebildete Sensor-Einrichtung (60) aufweist.

2. Luftabsperrhahn nach Anspruch 1,
**dadurch gekennzeichnet, dass**
die Sensor-Einrichtung (60) ausgebildet ist, Messdaten in Form zumindest eines erfassten Luftdruck-Messwertes und/oder zumindest einer aus dem zumindest einen erfassten Luftdruck-Messwert ermittelten Kenngröße auszusenden.

3. Luftabsperrhahn nach Anspruch 1 oder 2,
**dadurc hgekennzeichnet**, dass
die Sensor-Einrichtung (60) zum drahtlosen, insbesondere funkbasierten Aussenden der Messdaten ausgebildet ist.

4. Luftabsperrhahn nach Anspruch 2 oder 3,
**dadurch gekennzeichnet, dass**
die Sensor-Einrichtung (60) ausgebildet ist, mit den Messdaten eine für das jeweilige spurgebundene Fahrzeug und/oder die jeweilige Sensor-Einrichtung (60) spezifische Kennung auszusenden.

5. Luftabsperrhahn nach einem der Ansprüche 2 bis 4,
**dadurch gekennzeichnet, dass**
die Sensor-Einrichtung (60) ausgebildet ist, Messdaten anderer Sensor-Einrichtungen durch Empfangen und anschließendes Aussenden der Messdaten weiterzuleiten.

6. Luftabsperrhahn nach einem der vorangehenden Ansprüche,
**dadurch gekennzeichnet, dass**
der Luftabsperrhahn (60) eine leitungsunabhängige, autarke Energieversorgungs-Einrichtung aufweist.

7. Luftabsperrhahn nach Anspruch 6,
**dadurch gekennzeichnet, dass**
die Energieversorgungs-Einrichtung ausgebildet ist, aus dem Luftdruck in der Bremsluftleitung (20) elektrische Energie zu erzeugen.

8. Luftabsperrhahn nach einem der vorangehenden Ansprüche,
**dadurch gekennzeichnet, dass**
der Luftabsperrhahn (30) zum Detektieren der Stellung seines Betätigungshebels ausgebildet ist.

9. Fahrzeugverband mit
- einer Mehrzahl von gekoppelten spurgebundenen Fahrzeugen, von denen zumindest eines zumindest einen Luftabsperrhahn (30) nach einem der Ansprüche 2 bis 8 aufweist, sowie
- einem Triebfahrzeug mit einer Auswerte-Einrichtung zum Empfangen der durch die Sensor-Einrichtung (60) des zumindest einen Luftabsperrhahns (30) ausgesendeten Messdaten.

10. Verfahren zum Überwachen des Bremsdrucks spurgebundener Fahrzeuge,
**dadurch gekennzeichnet, dass**
- mittels einer Sensor-Einrichtung (60) zumindest eines Luftabsperrhahns (30) zumindest ein Luftdruck-Messwert erfasst wird,
- Messdaten in Form des zumindest einen erfassten Luftdruck-Messwertes und/oder zumindest einer aus dem zumindest einen erfassten Luftdruck-Messwert ermittelten Kenngröße von einer Auswerte-Einrichtung empfangen werden und
- der Bremsdruck von der Auswerte-Einrichtung anhand der empfangenen Messdaten überwacht wird.

11. Verfahren nach Anspruch 10,
**dadurch gekennzeichnet, dass**
bei einem Fahrzeugverband mit einem die Auswerte-Einrichtung aufweisenden Triebfahrzeug und einer Mehrzahl von gekoppelten spurgebundenen Fahrzeugen, von denen zumindest eines zumindest einen Luftabsperrhahn (30) mit einer Sensor-Einrichtung (60) zum Erfassen zumindest eines Luftdruck-Messwertes aufweist, von der Auswerte-Einrichtung anhand der empfangenen Messdaten die Reihung der spurgebundenen Fahrzeuge ermittelt und/oder die Vollständigkeit des Fahrzeugsverbands überwacht wird.

12. Verfahren nach Anspruch 10 oder 11,
**dadurch gekennzeichnet, dass**
die Messdaten von der Auswerte-Einrichtung drahtlos, insbesondere funkbasiert empfangen werden.

13. Verfahren nach einem der Ansprüche 10 bis 12,
**dadurch gekennzeichnet, dass**
von der Auswerte-Einrichtung mit den Messdaten eine für das jeweilige spurgebundene Fahrzeug und/oder die jeweilige Sensor-Einrichtung (60) spezifische Kennung empfangen wird.

14. Verfahren nach einem der Ansprüche 10 bis 13,
**dadurch gekennzeichnet, dass**
die Messdaten von der Auswerte-Einrichtung unter Zwischenschaltung weiterer Sensor-Einrichtungen empfangen werden.

15. Verfahren nach einem der Ansprüche 10 bis 14,
**dadurch gekennzeichnet, dass**
- von der Sensor-Einrichtung (60) Funksignale zumindest einer weiteren Sensor-Einrichtung empfangen werden und
- die Sensor-Einrichtung (60) im Falle einer Änderung der Empfangsqualität der empfangenen Funksignale eine Statusmeldung an die Auswerte-Einrichtung aussendet.

## Claims

1. Air shut-off valve (30) for a brake air line (20) of a rail-bound vehicle,
**characterised in that**
the air shut-off valve (30) comprises a sensor apparatus (60) configured for capturing air pressure measurement values.

2. Air shut-off valve according to claim 1,
**characterised in that**
the sensor apparatus (60) is configured to send measurement data in the form of at least one captured air pressure measurement value and/or at least one characteristic variable ascertained from the at least one captured air pressure measurement value.

3. Air shut-off valve according to claim 1 or 2,
**characterised in that**
the sensor apparatus (60) is configured for sending the measurement data wirelessly, in particular on a radio basis.

4. Air shut-off valve according to claim 2 or 3,
**characterised in that**
the sensor apparatus (60) is configured to send, with the measurement data, an identifier which is specific to the respective rail-bound vehicle and/or the respective sensor apparatus (60).

5. Air shut-off valve according to one of claims 2 to 4,
**characterised in that**
the sensor apparatus (60) is configured to forward measurement data of other sensor apparatuses by receiving and subsequently sending the measurement data.

6. Air shut-off valve according to one of the preceding claims,
**characterised in that**
the air shut-off valve (60) comprises a line-independent, autonomous energy supply apparatus.

7. Air shut-off valve according to claim 6,
**characterised in that**
the energy supply apparatus is configured to generate electrical energy from the air pressure in the brake air line (20) .

8. Air shut-off valve according to one of the preceding claims,
**characterised in that**
the air shut-off valve (30) is configured to detect the position of its actuation lever.

9. Vehicle set with
- a plurality of coupled rail-bound vehicles, of which at least one comprises at least one air shut-off valve (30) according to one of claims 2 to 8, and
- a traction vehicle with an evaluation apparatus for receiving the measurement data sent by the sensor apparatus (60) of the at least one air shut-off valve (30).

10. Method for monitoring the brake pressure of rail-bound vehicles,
**characterised in that**
- at least one air pressure measurement value is captured by means of a sensor apparatus (60) of at least one air shut-off valve (30),
- measurement data in the form of the at least one captured air pressure measurement value and/or at least one characteristic variable ascertained from the at least one captured air pressure measurement value is received by an evaluation apparatus and
- the brake pressure is monitored by the evaluation apparatus on the basis of the received measurement data.

11. Method according to claim 10,
**characterised in that**
in a vehicle set with a traction vehicle comprising the evaluation apparatus and a plurality of coupled rail-bound vehicles, of which at least one comprises at least one air shut-off valve (30) with a sensor apparatus (60) for capturing at least one air pressure measurement value, the evaluation apparatus uses the received measurement data to ascertain the sequence of the rail-bound vehicles and/or monitor the completeness of the vehicle set.

12. Method according to claim 10 or 11,
**characterised in that**
the measurement data is received by the evaluation apparatus wirelessly, in particular on a radio basis.

13. Method according to one of claims 10 to 12,
**characterised in that**
the evaluation apparatus receives, with the measurement data, an identifier which is specific to the respective rail-bound vehicle and/or the respective sensor apparatus (60).

14. Method according to one of claims 10 to 13,
**characterised in that**
the measurement data is received by the evaluation apparatus with the interposition of further sensor apparatuses.

15. Method according to one of claims 10 to 14,
**characterised in that**
- radio signals of at least one further sensor apparatus are received by the sensor apparatus (60), and
- in the event of a change in the receiving quality of the received radio signals, the sensor apparatus (60) sends a status report to the evaluation apparatus.

## Revendications

1. Robinet (30) d'arrêt d'air pour un conduit (20) d'air de frein d'un véhicule guidé sur rail,
**caractérisé en ce que**
le robinet (30) d'arrêt d'air a un dispositif (60) capteur, constitué pour relever des valeurs de mesure de la pression de l'air.

2. Robinet d'arrêt d'air suivant la revendication 1,
**caractérisé en ce que**
le dispositif (60) capteur est constitué pour émettre des données de mesure sous la forme d'au moins une valeur de mesure relevée de la pression de l'air et/ou d'au moins une grandeur caractéristique déterminée à partir de la au moins une valeur de mesure relevée de la pression de l'air.

3. Robinet d'arrêt d'air suivant la revendication 1 ou 2,
**caractérisé en ce que**
le dispositif (60) capteur est constitué pour l'émission sans fil, notamment par radio, des données de mesure.

4. Robinet d'arrêt d'air suivant la revendication 2 ou 3,
**caractérisé en ce que**
le dispositif (60) capteur est constitué pour émettre, avec les données de mesure, une caractérisation spécifique du véhicule guidé sur rail respectif et/ou du dispositif (60) capteur respectif.

5. Robinet d'arrêt d'air suivant l'une des revendications 2 à 4,
**caractérisé en ce que**
le dispositif (60) capteur est constitué pour acheminer des données de mesure d'autres dispositifs capteurs par réception et ensuite émission des données de mesure.

6. Robinet d'arrêt d'air suivant l'une des revendications précédentes,
**caractérisé en ce que**
le robinet (60) d'arrêt d'air a un dispositif d'alimentation en énergie autonome, indépendant du conduit.

7. Robinet d'arrêt d'air suivant la revendication 6,
**caractérisé en ce que**
le dispositif d'alimentation en énergie est constitué pour produire de l'énergie électrique à partir de la pression de l'air dans le conduit (20) d'air de frein.

8. Robinet d'arrêt d'air suivant l'une des revendications précédentes,
**caractérisé en ce que**
le robinet (30) d'arrêt d'air est constitué pour détecter la position d'un levier d'actionnement.

9. Convoi de véhicules, comprenant
- une pluralité de véhicules guidés sur rail attelés, dont au moins l'un a au moins un robinet (30) d'arrêt d'air suivant l'une des revendications 2 à 8, ainsi
- qu'une motrice ayant un dispositif d'exploitation pour la réception des données de mesure émises par le dispositif (60) capteur du au moins un robinet (30) d'arrêt d'air.

10. Procédé de contrôle de la pression de freinage de véhicules guidés sur rail,
**caractérisé en ce que**
- on relève une valeur de mesure de la pression de l'air au moyen d'un dispositif (60) capteur d'au moins un robinet (30) d'arrêt d'air,
- on reçoit, par un dispositif d'exploitation, des données de mesure sous la forme de la au moins une valeur de mesure relevée de la pression de l'air et/ou d'au moins une grandeur caractéristique déterminée à partir de la au moins une valeur de mesure relevée de la pression de l'air et
- on contrôle la pression de freinage par le dispositif d'exploitation à l'aide des données de mesure reçues.

11. Procédé suivant la revendication 10,
**caractérisé en ce que**,
pour un convoi de véhicules, comprenant une motrice ayant le dispositif d'exploitation et une pluralité de véhicules attelés guidés sur rail, dont l'un au moins a au moins un robinet (30) d'arrêt d'air ayant un dispositif (60) capteur pour relever au moins une valeur de mesure de la pression de l'air, on détermine, par le dispositif d'exploitation à l'aide des données de mesure reçues, la composition des véhicules guidés sur rail et/ou que le convoi de véhicules est complet.

12. Procédé suivant la revendication 10 ou 11,
**caractérisé en ce que**
l'on reçoit sans fil, notamment par radio, les données de mesure par le dispositif d'exploitation.

13. Procédé suivant l'une des revendications 10 à 12,
**caractérisé en ce que**
l'on reçoit par le dispositif d'exploitation, avec les données de mesure, une caractérisation spécifique du véhicule respectif guidé sur rail et/ou du dispositif (60) de capteur respectif.

14. Procédé suivant l'une des revendications 10 à 13,
**caractérisé en ce que**
l'on reçoit les données de mesure par le dispositif d'exploitation avec interposition d'autres dispositifs capteurs.

15. Procédé suivant l'une des revendications 10 à 14,
**caractérisé en ce que**
- l'on reçoit, par le dispositif (60) capteur, des signaux radio d'au moins un autre dispositif capteur et
- le dispositif (60) capteur envoie, dans le cas d'une variation de la qualité de réception des signaux radio reçus, un message d'état au dispositif d'exploitation.
